# EUROPÄISCHE PATENTSCHRIFT

(11) **EP 1 534 555 B1**
(45) Veröffentlichungstag und Bekanntmachung des Hinweises auf die Patenterteilung: **24.10.2007**
(21) Anmeldenummer: 03762503.5
(22) Anmeldetag: 24.06.2003
(51) Int. Cl.: B60N 2/06

(54) **LÄNGSEINSTELLER FÜR EINEN FAHRZEUGSITZ**
LONGITUDINAL ADJUSTMENT MECHANISM FOR A VEHICLE SEAT
SYSTEME DE REGLAGE LONGITUDINAL POUR SIEGE DE VEHICULE

(30) Priorität: 06.07.2002 DE 10230514
(43) Veröffentlichungstag der Anmeldung: 01.06.2005
(73) Patentinhaber: KEIPER GmbH & Co. KG, 67657 Kaiserslautern (DE)
(72) Erfinder: BORBE, Michael, 53359 Rheinbach (DE); WETZIG, Stefan, 58258 Ennepetal (DE)
(74) Vertreter: Patentanwälte Hosenthien-Held und Dr. Held
(86) Internationale Anmeldenummer: PCT/EP2003/006609
(87) Internationale Veröffentlichungsnummer: WO 2004/005066

(56) Entgegenhaltungen:
- EP-A- 1 010 571
- DE-A- 10 139 631
- US-A- 5 259 257
- US-A- 5 797 293
- US-A- 6 138 974
- US-B1- 6 244 660

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Aus der DE 198 15 283 C2 ist ein Längseinsteller dieser Art bekannt, bei welchem das Getriebe in einem Getriebegehäuse sitzt, das von einem Lagerbügel mit einem horizontalen Bodenabschnitt und zwei vertikalen Lagerplattenabschnitten vor und hinter dem Getriebegehäuse gehalten wird. Der Lagerbügel ist mit der Oberschiene verbunden, indem er in Längsrichtung vor und hinter dem Gehäuse an der Oberschiene angeschraubt ist. Aus der US 6,138,974 A, US 6,244,660 B1, US 5,259,257 A, EP 1 010 571 A2 und US 5,797,293 A ist bekannt, dass die Spindelmutter bezüglich Rotationen feststeht und die Getriebespindel gedreht wird. Gemäß der DE 101 39 631 A1 bilden die Lagerplatten und die zweite Sitzschiene direkt das Gehäuse für das zweite Getriebeelement.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, dass jede Lagerplatte oder jeder Lagerplattenbereich, die vertikal angeordnet sind, an wenigstens zwei Seiten, insbesondere an den beiden vertikalen Seiten und vorzugsweise an insgesamt drei Seiten, mittels Formschluss fest mit der zweiten Sitzschiene verbunden ist, können von dem Längseinsteller große Antriebskräfte und Crashlasten aufgenommen werden. Es können einzelne Lagerplatten oder funktionsgleiche Lagerplattenabschnitte einer zusammenhängenden Einheit, beispielsweise eines Lagerbügels, eingesetzt werden. Die Lagerplatten oder Lagerplattenabschnitte können in leichtem Pressverbau - auf Ist-Maß kalibriert - in die zweite Sitzschiene eingefügt, wobei ein Formschluss an drei Seiten entsteht. Möglichkeiten zur festen Verbindung sind Nieten oder ein Stoffschluss, insbesondere Schweißen. Die hohe Lastaufnahme bei größtmöglicher Steifigkeit wird vorzugsweise gesteigert durch einen Formschluss zwischen Öffnungen in der Sitzschiene und passende Materialpartien der Lagerplatten oder Lagerplattenabschnitte, wobei die Öffnungen auch zur Zugänglichkeit der Lagerplatten oder Lagerplattenabschnitte bei der Herstellung des Stoffschlusses dienen können. Der Formschluss kann in Längsrichtung und/oder in vertikaler Richtung vorgesehen sein. Durch die Überbrückung der Öffnungen in der Sitzschiene mittels des Stoffschlusses oder mittels eines Deckels wird eine Schwächung der Sitzschiene vermieden. Der Abstand der Lagerplatten oder Lagerplattenabschnitte kann durch eine Kalibriervorrichtung eingestellt werden, wobei die Öffnungen der Sitzschiene eine entsprechende Kalibrierung auch zulassen. Die feste Verbindung der Sitzschiene und der Lagerplatten oder Lagerplattenabschnitte wird mit dem eingestellten Abstand vorgenommen.

Durch das Getriebegehäuse können die Achsabstände der Getriebeelemente besser eingehalten werden, was zu einer geringeren Geräuschbildung und einem geringeren Verschleiß führt. Für eine gezielte Spielreduzierung in Längsrichtung und eine reduzierte Resonanzwiedergabe in alle Richtungen sind vorzugsweise Dämpferelemente vorgesehen, die zwischen dem Getriebegehäuse und den Lagerplatten angeordnet sind. In einer bevorzugten, mit hohen Antriebskräften belastbaren Ausführung sind als Getriebeelemente eine stehende Getriebespindel und ein sich auf der Getriebespindel drehendes Schneckenrad vorgesehen.

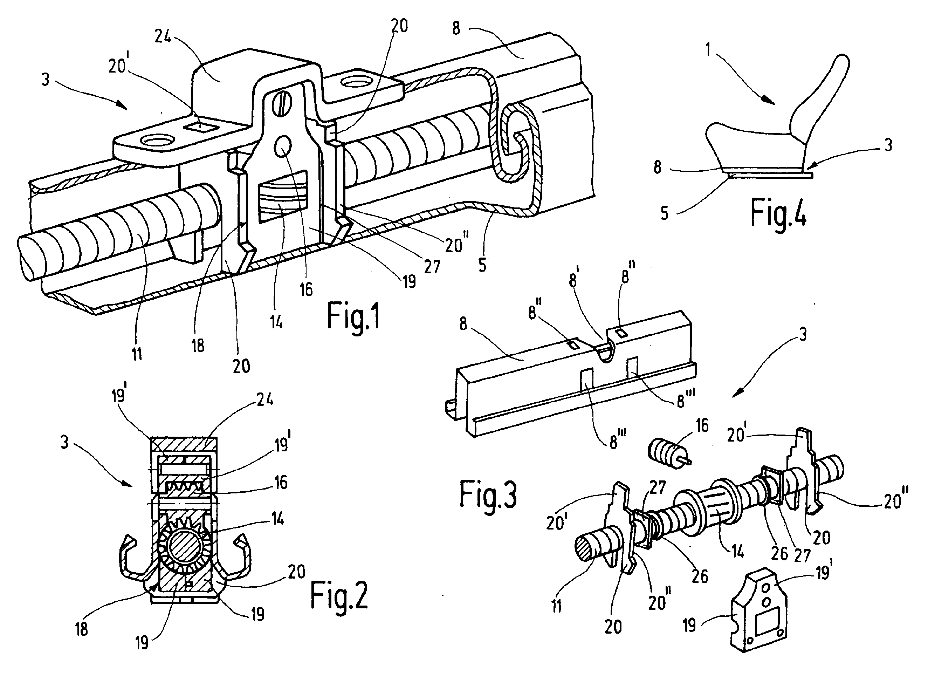

Im folgenden ist die Erfindung anhand zweier in der Zeichnung dargestellter Ausführungsbeispiele näher erläutert. Es zeigen
- Fig. 1: eine perspektivische, teilweise geschnitten dargestellte Teilansicht des ersten Ausführungsbeispiels,
- Fig. 2: einen Querschnitt durch das erste Ausführungsbeispiel im Bereich der Oberschiene,
- Fig. 3: eine Explosionsdarstellung einiger Teile des ersten Ausführungsbeispiels,

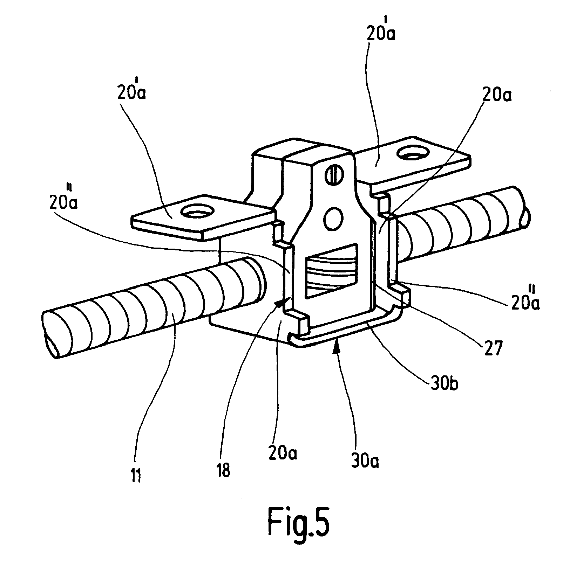

- Fig. 4: eine schematische Darstellung eines Fahrzeugsitzes, und
- Fig. 5: eine perspektivische Teilansicht des zweiten Ausführungsbeispiels.

Ein motorisch längseinstellbarer Fahrzeugsitz 1 ist mit einer Längseinstellvorrichtung versehen, im folgenden als Längseinsteller 3 bezeichnet. Der Längseinsteller 3 weist auf jeder Seite des Fahrzeugsitzes 1 ein Paar von Sitzschienen auf, bestehend aus einer fahrzeugstrukturfesten Unterschiene 5 als Führungsschiene und einer sitzteilstrukturfesten, in der Unterschiene 5 gleitend geführten Oberschiene 8 als Laufschiene. Die Unterschiene 5 und Oberschiene 8, welche beide im wesentlichen U-förmig ausgebildet sind, hintergreifen einander mit ihren nach innen bzw. außen gebogenen Randbereichen unter Bildung eines geschlossenen Schienenprofils. Die Sitzschienen definieren zugleich die nachfolgenden Richtungsangaben.

Der Längseinsteller 3 weist ferner innerhalb des durch das Schienenprofil definierten Bauraumes eine mit der Unterschiene 5 fest verbundene und in Längsrichtung derselben verlaufende Getriebespindel 11 auf, auf deren Außengewinde in der Art einer Spindelmutter ein Schneckenrad 14 mit einem Innengewinde geschraubt ist. In einer mittleren Sitzlängsposition des Fahrzeugsitzes 1 befindet sich das Schneckenrad 14 in der Mitte der Unterschiene 5. Auf seiner Außenseite weist das Schneckenrad 14 eine Schrägverzahnung auf, mit welcher von oben her eine Antriebsschnecke 16 in Getriebeeingriff steht. Die Antriebsschnecke 16 steht in Wirkverbindung mit einem nicht näher dargestellten elektrischen Antriebsmotor des Längseinstellers 3.

Zur Lagerung der beschriebenen Getriebeelemente ist ein Getriebegehäuse 18 vorgesehen, welches den durch das Schienenprofil definierten Bauraum mit größtmöglicher Steifigkeit als krafttragendes Gehäuse maximal ausfüllt, also im wesentlichen innerhalb der Oberschiene 8 angeordnet ist. Das Getriebegehäuse 18 besteht aus zwei Gehäuseseitenteilen 19, welche bereichsweise aneinander anliegen und miteinander verschraubt sind. Die beiden Gehäuseseitenteile 19 lagern die quer zur Längsrichtung der Oberschiene 8 angeordnete Antriebsschnecke 16. Für das Schneckenrad 14 ist in jedem Gehäuseseitenteil 19 ein Fenster vorgesehen, so daß dessen Abmessung nicht auf die lichte Breite des Getriebegehäuses 18 festgelegt ist. Mittels Vorsprüngen 19' ragen die Gehäuseseitenteile 19 durch eine vorgestanzte erste Öffnung 8' in der Oberschiene 8.

Im ersten Ausführungsbeispiel ist vor und hinter dem Getriebegehäuse 18 jeweils eine flache Lagerplatte 20 vertikal angeordnet, welche in ihren Außenkonturen dem Schienenprofil angepaßt ist. Jede Lagerplatte 20 weist einen nach unten offenen, vertikalen Schlitz auf, in welchen von unten her die senkrecht zur Lagerplatte 20 verlaufende Getriebespindel 11 eingeführt ist. Auf der nach oben weisenden Seite ist an jeder Lagerplatte 20 eine nach oben abstehende Lasche 20' angeformt, welche formschlüssig durch eine weitere vorgestanzte zweite Öffnung 8" der Oberschiene 8 greift und über dieselbe übersteht. Seitliche Randbereiche 20" jeder Lagerplatte 20 greifen formschlüssig durch seitliche dritte Öffnungen 8'" der Oberschiene 8. Die Lagerplatten 20 sind zusätzlich mit der Oberschiene 8 stoffschlüssig verbunden, beispielsweise im Bereich der Laschen 20' und der Randbereiche 20" laserverschweißt.

Über die Oberschiene 8 ist im Bereich der ersten Öffnung 8' und der zweiten Öffnungen 8" ein Deckel 24 oder Abdeckblech gelegt. Der Deckel 24 ist mit den Lagerplatten formschlüssig und stoffschlüssig verbunden, indem die freien Enden der Laschen 20' von entsprechenden Aufnahmen des Deckels 24 unter Formschluß in Längsrichtung der Oberschiene 8 aufgenommen werden, so daß der Deckel 24 beim Verschweißen der Laschen 20' mitverbunden wird. Die Vorsprünge 19' des Getriebegehäuses 18 werden vorzugsweise vollständig vom Deckel 24 abgedeckt.

Das Getriebegehäuse 18 ist grundsätzlich mit Spiel, also in eingeschränktem Maße beweglich, zwischen den Lagerplatten 20 angeordnet. Zwischen dem Getriebegehäuse 18 und den Lagerplatten 20 ist aber jeweils unter Zwischenlage einer Lagerbuchse 26 ein Dämpferelement 27 über die Getriebespindel 11 geschoben. Das Dämpferelement 27 übergreift mit seinem Rand einen Teil des Getriebegehäuses 18 samt Lagerbuchse 25. Das aus einem Dämpfungsmaterial bestehende Dämpferelement 27 reduziert das freie Spiel und die Resonanzwiedergabe sowohl in Längsrichtung als auch quer dazu, d.h. in alle Richtungen. Bei der Montage wird die Getriebespindel 11 zunächst mit dem Getriebegehäuse 18 samt Getriebe, Dämpferelementen 27 und zugehörigen Bauteilen vormontiert und von unten her in die zuvor lackierte Oberschiene 8 samt Lagerplatten 20 eingeführt.

Zur Längseinstellung treibt der Antriebsmotor über die Antriebsschnecke 16 das Schneckenrad 14 an, welches sich über die stehende Getriebespindel 11 bewegt und dabei durch Ausübung einer Druckkraft über das Getriebegehäuse 18 und die Dämpferelemente 27 auf die Lagerplatten 20 die Oberschiene 8 mitnimmt. Die Lagerplatten 20 nehmen auch bei einer statischen Längsverriegelung der Sitzschienen 5 und 8 die über das Getriebegehäuse 18 wirkenden Kräfte auf.

Das zweite Ausführungsbeipiel stimmt mit dem ersten Ausführungsbeispiel überein, soweit nachfolgend nicht abweichend beschrieben, weshalb gleiche Bauteile gleiche Bezugszeichen tragen und gleichwirkende Bauteile durch Bezugszeichen gekennzeichnet sind, die mit Kleinbuchstaben ergänzt sind.

Das Getriebegehäuse 18 ist weiterhin innerhalb des Schienenprofils angeordnet, wird jedoch von einem doppelt abgekröpften, einstückig ausgebildeten Lagerbügel 30a aufgenommen. Der Lagerbügel 30a weist in seiner Mitte einen horizontalen Bodenabschnitt 30b auf, welcher unterhalb des Getriebegehäuses 18 angeordnet ist. An den Bodenabschnitt 30b schließt sich in Längsrichtung vor und hinter dem Getriebegehäuse 18 je ein vertikal angeordneter Lagerplattenabschnitt 20a an, welcher vom Bodenabschnitt 30b senkrecht nach oben absteht und in seinen Außenkonturen an das Schienenprofil angepaßt ist. An jeden vertikalen Lagerplattenabschnitt 20a schließt sich als Endabschnitt je eine horizontale Lasche 20a' an, welche auf der vom Getriebegehäuse 18 abgewandten Seite am oberen Ende des Lagerplattenabschnitts 20a angeformt ist. Die beiden Laschen 20a' weist beispielsweise Anschraubstellen zur Befestigung an der Oberschiene 8 und/oder am Deckel 24 auf.

Die Lagerplattenabschnitte 20a bewirken die erhöhte Lastaufnahme, d.h. die seitlichen Randbereiche 20a" greifen durch seitliche dritte Öffnungen 8"' der Oberschiene 8 und sind mit der Oberschiene 8 stoffschlüssig verbunden. Der Unterschied zum ersten Ausführungsbeispiel besteht lediglich darin, daß die beiden Lagerplattenabschnitte 20a mit einander einstückig verbunden sind.

### Bezugszeichenliste

- 1: Fahrzeugsitz
- 3: Längseinstellvorrichtung, Längseinsteller
- 5: Unterschiene, erste Sitzschiene
- 8: Oberschiene, zweite Sitzschiene
- 8': erste Öffnung
- 8": zweite Öffnung
- 8"': dritte Öffnung
- 11: Getriebespindel, erstes Getriebeelement
- 14: Schneckenrad, zweites Getriebeelement
- 16: Antriebsschnecke
- 18: Getriebegehäuse
- 19: Gehäuseseitenteil
- 19': Vorsprung
- 20, 20a: Lagerplatte, Lagerplattenabschnitt
- 20', 20a': Lasche
- 20", 20a": Randbereich
- 24: Deckel
- 26: Lagerbuchse
- 27: Dämpferelement
- 30a: Lagerbügel
- 30b: Bodenabschnitt

## Patentansprüche

1. Längseinsteller (3) für einen Fahrzeugsitz (1), insbesondere für einen Kraftfahrzeugsitz, zur motorischen Längseinstellung des Fahrzeugsitzes (1), mit einer die Längsrichtung definierenden ersten Sitzschiene (5), einer relativ zur ersten Sitzschiene (5) verschiebbaren zweiten Sitzschiene (8), einem ersten Getriebeelement (11) der ersten Sitzschiene (5), das als eine mit der ersten Sitzschiene (5) fest verbundene, feststehende Getriebespindel (11) ausgebildet ist, und einem mit dem ersten Getriebeelement (11) zur Längseinstellung zusammenwirkenden zweiten Getriebeelement (14), wobei als zweites Getriebeelement (14) ein drehbares Schneckenrad vorgesehen ist, welches auf die Getriebspindel (11) geschraubt ist und über eine Antriebsschnecke (16) von einem Antriebsmotor angetrieben wird, und welches in einem der zweiten Sitzschiene (8) zugeordneten Getriebegehäuse (18) gelagert ist, das in Längsrichtung zwischen zwei mit der zweiten Sitzschiene (8) in Verbindung stehende vertikal angeordneten Lagerplatten (20) oder Lagerplattenabschnitten (20a) gelagert ist, **dadurch gekennzeichnet, dass** jede Lagerplatte (20) oder jeder Lagerplattenabschnitt (20a) an wenigstens je zwei Seiten formschlüssig fest mit der zweiten Sitzschiene (8) verbunden ist.

2. Längseinsteller (3) nach Anspruch 1, **dadurch gekennzeichnet, dass** jede Lagerplatte (20) oder Lagerplattenabschnitt (20a) an drei Seiten mit der zweiten Sitzschiene (8) verbunden ist.

3. Längseinsteller (3) nach einem der vorhergehenden Ansprüche, **dadurch gekennzeichnet, dass** die Lagerplatten (20) oder Lagerplattenabschnitte (20a) stoffschlüssig mit der zweiten Sitzschiene (8) verbunden sind.

4. Längseinsteller (3) nach Anspruch 3, **dadurch gekennzeichnet, dass** die Lagerplatten (20) oder Lagerplattenabschnitte (20a) einerseits und die zweite Sitzschiene (8) andererseits durch Laserschweißen miteinander verbunden sind.

5. Längseinsteller (3) nach einem der vorhergehenden Ansprüche, **dadurch gekennzeichnet, dass** die zweite Sitzschiene (8) mehrere Öffnungen (8", 8"') zur Aufnahme und/oder Zugänglichkeit von Materialpartien (20', 20"; 20a") der Lagerplatten (20) oder Lagerplattenabschnitte (20a) aufweist.

6. Längseinsteller (3) nach Anspruch 5, **dadurch gekennzeichnet, dass** Materialpartien (20') der Lagerplatten (20) oder Lagerplattenabschnitte (20a) formschlüssig in Öffnungen (8") der zweiten Sitzschiene (8) gesteckt sind.

7. Längseinsteller nach (3) nach Anspruch 6, **dadurch gekennzeichnet, dass** die Lagerplatten (20) oder Lagerplattenabschnitte (20a) mit den formschlüssig in die Öffnungen (8") gesteckten Materialpartien (20') einerseits und die zweite Sitzschiene (8) andererseits stoffschlüssig miteinander verbunden sind.

8. Längseinsteller (3) nach einem der vorhergehenden Ansprüche, **dadurch gekennzeichnet, dass** ein einstückig ausgebildeter Lagerbügel (30a) vorgesehen ist, welcher die zwei Lagerplattenabschnitte (20a) aufweist.

9. Längseinsteller (3) nach einem der vorhergehenden Ansprüche, **dadurch gekennzeichnet, dass** zwischen dem Getriebegehäuse (18) einerseits und den Lagerplatten (20) oder Lagerplattenabschnitten (20a) andererseits Anschlagdämpfer (27) vorgesehen sind.

10. Motorisch längseinstellbarer Fahrzeugsitz (1) mit ineinander geführten Sitzschienen (5, 8), **gekennzeichnet durch** einen Längseinsteller (3) nach einem der vorhergehenden Ansprüche.

## Claims

1. Longitudinal adjuster (3) for a vehicle seat (1), in particular for a motor vehicle seat, for motor-driven longitudinal adjustment of the vehicle seat (1), having a first seat rail (5) defining the longitudinal direction, a second seat rail (8) that can be displaced relative to the first seat rail (5), a first gear element (11) of the first seat rail (5) that is constructed in the form of a stationary gear spindle (11) which is fixedly connected to the first seat rail (5), and a second gear element (14) cooperating with the first gear element (11) to achieve longitudinal adjustment, a rotatable worm wheel being provided as a second gear element (14) and being screwed on the gear spindle (11) and being driven by a drive motor by means of a drive worm (16), and being mounted in a gear casing (18) associated with the second seat rail (8), the gear casing (18) being mounted longitudinally between two vertically arranged bearing plates (20) or bearing plate portions (20a) connected to the second seat rail (8), **characterised in that** each bearing plate (20) or each bearing plate portion (20a) is securely connected to the second seat rail (8) in a positive-locking manner on at least two sides.

2. Longitudinal adjuster (3) according to claim 1, **characterised in that** each bearing plate (20) or bearing plate portion (20a) is connected to the second seat rail (8) on three sides.

3. Longitudinal adjuster (3) according to either of the preceding claims, **characterised in that** the bearing plates (20) or bearing plate portions (20a) are materially connected to the second seat rail (8).

4. Longitudinal adjuster (3) according to claim 3, **characterised in that** the bearing plates (20) or bearing plate portions (20a) on the one hand and the second seat rail (8) on the other hand are connected to each other by laser welding.

5. Longitudinal adjuster (3) according to any one of the preceding claims, **characterised in that** the second seat rail (8) has several openings (8", 8"') for receiving material parts (20', 20"; 20a") of the bearing plates (20) or bearing plate portions (20a) and/or for providing access to said material parts.

6. Longitudinal adjuster (3) according to claim 5, **characterised in that** material parts (20') of the bearing plates (20) or the bearing plate portions (20a) are inserted in a positive-locking manner into openings (8") of the second seat rail (8).

7. Longitudinal adjuster (3) according to claim 6, **characterised in that** the bearing plates (20) or the bearing plate portions (20a) with the material parts (20') inserted in the openings (8") in a positive-locking manner on the one hand and the second seat rail (8) on the other hand are materially connected to each other.

8. Longitudinal adjuster (3) according to any one of the preceding claims, **characterised in that** a monolithic curved mounting member (30a) is provided and has the two bearing plate portions (20a).

9. Longitudinal adjuster (3) according to any one of the preceding claims, **characterised in that** there are provided impact absorbers (27) between the gear casing (18) on the one hand and the bearing plates (20) or bearing plate portions (20a) on the other hand.

10. Vehicle seat (1) with motor-driven longitudinal adjustment having seat rails (5, 8), one running inside the other, **characterised by** a longitudinal adjuster (3) according to any one of the preceding claims.

## Revendications

1. - Dispositif de réglage en longueur (3) pour un siège de véhicule (1), en particulier pour un siège de véhicule automobile, pour le réglage en longueur par moteur du siège de véhicule (1), comportant un premier rail de siège (5) définissant la direction de la longueur, un deuxième rail de siège (8) déplaçable par rapport au premier rail de siège (5), un premier élément d'entraînement (11) du premier rail de siège (5), qui est réalisé sous la forme d'une broche d'entraînement (11), fixe, liée de façon fixe avec le premier rail de siège (5), et un deuxième élément d'entraînement (14) coopérant pour le réglage en longueur avec le premier élément d'entraînement (11), à l'occasion de quoi, comme deuxième élément d'entraînement (14) est prévue une roue-vis tournante, laquelle est vissée sur la broche d'entraînement (11) et est actionnée par l'intermédiaire d'une vis de commande (16) par un moteur de commande, et laquelle est montée dans un boîtier d'entraînement (18) qui est associé au deuxième rail de siège (8) et qui est monté dans le sens de la longueur entre deux plaques d'appui (20) ou sections de plaque d'appui (20a) disposées verticalement, se trouvant en liaison avec le deuxième rail de siège (8), **caractérisé par le fait que** chaque plaque d'appui (20) ou chaque section de plaque d'appui (20a) est reliée de façon fixe à engagement positif sur respectivement au moins deux côtés avec le deuxième rail de siège (8).

2. - Dispositif de réglage en longueur (3) selon la revendication 1, **caractérisé par le fait que** chaque plaque d'appui (20) ou section de plaque d'appui (20a) est reliée sur trois côtés avec le deuxième rail de siège (8).

3. - Dispositif de réglage en longueur (3) selon l'une des revendications précédentes, **caractérisé par le fait que** les plaques d'appui (20) ou sections de plaque d'appui (20a) sont reliées par liaison de matière avec le deuxième rail de siège (8).

4. - Dispositif de réglage en longueur (3) selon la revendication 3, **caractérisé par le fait que** les plaques d'appui (20) ou sections de plaques d'appui (20a) d'une part et le deuxième rail de siège (8) d'autre part sont reliés ensemble par soudage laser.

5. - Dispositif de réglage en longueur (3) selon l'une des revendications précédentes, **caractérisé par le fait que** le deuxième rail de siège (8) présente plusieurs ouvertures (8 " , 8"') pour la réception et/ou l'accessibilité de parties de matière (20', 20" ; 20a") des plaques d'appui (20) ou sections de plaque d'appui (20a).

6. - Dispositif de réglage en longueur (3) selon la revendication 5, **caractérisé par le fait que** des parties de matière (20') des plaques d'appui (20) ou sections de plaque d'appui (20a) sont introduites à engagement positif dans des ouvertures (8") du deuxième rail de siège (8).

7. - Dispositif de réglage en longueur (3) selon la revendication 6, **caractérisé par le fait que** les plaques d'appui (20) ou sections de plaque d'appui (20a) avec les parties de matière (20") introduites à engagement positif dans les ouvertures (8") d'une part et le deuxième rail de siège (8) d'autre part sont reliés ensemble par liaison de matière.

8. - Dispositif de réglage en longueur (3) selon l'une des revendications précédentes, **caractérisé par le fait qu'**un étrier d'appui (30a) réalisé d'une seule pièce est prévu, lequel présente les deux sections de plaque d'appui (20a).

9. - Dispositif de réglage en longueur (3) selon l'une des revendications précédentes, **caractérisé par le fait qu'**entre le boîtier d'entraînement (18) d'une part et les plaques d'appui (20) ou sections de plaque d'appui (20a) d'autre part sont prévus des amortisseurs de butée (27).

10. - Siège de véhicule automobile (1) réglable en longueur par moteur avec des rails de siège (5, 8) guidés l'un dans l'autre, **caractérisé par** un dispositif de réglage en longueur (3) tel que défini à l'une des revendications précédentes.
